Europäisches Patentamt

European Patent Office

Office européen des brevets

(11) Veröffentlichungsnummer: **0 358 057**

**A2**

# (12) EUROPÄISCHE PATENTANMELDUNG

(21) Anmeldenummer: 89115659.8

(22) Anmeldetag: 25.08.89

(51) Int. Cl.5: **G01J 4/04 , G02B 5/30**

(30) Priorität: 07.09.88 DE 3830398

(43) Veröffentlichungstag der Anmeldung:
14.03.90 Patentblatt 90/11

(84) Benannte Vertragsstaaten:
DE FR GB

(71) Anmelder: **Bodenseewerk Perkin-Elmer & Co. GmbH**
**Alte Nussdorfer Strasse 15 Postfach 1120**
**D-7770 Überlingen/Bodensee(DE)**

(72) Erfinder: **Tomoff, Toma**
**Lavendelweg 9**
**D-7770 Überlingen(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**D-5620 Velbert 11 Langenberg(DE)**

(54) **Antriebsvorrichtung zum Antreiben eines Schwingpolarisators.**

(57) Bei einer Antriebsvorrichtung zum Antreiben eines Schwingpolarisators bei einem Polarimeter wird der Polarisator (48) von einem Schrittmotor angetrieben, der zu einer hin-und hergehenden Stellbewegung angesteuert wird. Mit dem Schwingpolarisator ist ein Referenzlagegeber verbunden, der bei einer definierten Lage des Schwingpolarisators ein Referenzsignal liefert. Eine Nullage des Referenzsignalgebers gegenüber der Lage, bei welcher der Referenzsignalgeber anspricht, ist um eine vorgegebene Anzahl von Schritten des Schrittmotors versetzt. Der Schrittmotor ist von einem Rechner gesteuert.

Fig. 3

EP 0 358 057 A2

## Antriebsvorrichtung zum Antreiben eines Schwingpolarisators

Die Erfindung betrifft eine Antriebsvorrichtung zum Antreiben eines Schwingpolarisators.

### Zugrundeliegender Stand der Technik

Durch die DE-AS 1 159 180 ist ein Polarimeter mit einem Polarisator, einem Analysator und einem hinter dem Analysator angeordneten Strahlungsempfänger bekannt, bei welchem zwischen Polarisator und Analysator eine optisch aktive Probe eingebracht und der Polarisator zu Drehschwingungen um die Bündelachse angeregt wird. Das Ausgangssignal des Strahlungsempfängers beaufschlagt phasenempfindliche Abgleichmittel, die bei einer Drehung der Polarisationsebene ein Nachdrehen des Analysators bewirken. Bei dem bekannten Polarimeter ist der Polarisator mit einem zylindrisch ausgebildeten, diametral magnetisierten Permanentmagneten verbunden. Der Permanentmagnet ist von konkav - zylindrischen Polflächen eines mit Wechselspannung erregten Elektromagneten umschlossen. Eine radiale Blattfeder fesselt den Permanentmagneten und den Polarisator an seine Ruhelage.

Bei der bekannten Antriebsvorrichtung schwingt der Polarisator sinusförmig mit der Netzfrequenz in der Nähe der Resonanz des von Polarisator, Permanentmagneten und Blattfeder gebildeten schwingungsfähigen Systems. Das macht es erforderlich, die Blattfeder in ihrer Länge so einzustellen, daß die Resonanzfrequenz des Systems im wesentlichen mit der Netzfrequenz übereinstimmt. Das erfordert eine Justage. Außerdem verschleißt die Blattfeder an der Einspannstelle.

Um den Schwingwinkel konstant zu halten, muß die Antriebsspannung genau stabilisiert werden.

Die Meßsignale haben die Frequenz der Netzspannung und der zweiten Harmonischen der Netzfrequenz. Solche Signale werden leicht vom Netz gestört. Es tritt "Brumm" auf. Dadurch wird die Signalverarbeitung erschwert.

Aus Stabilitätsgründen ist beim Einschalten des Gerätes eine längere Einlaufzeit erforderlich. Daher wird der Schwingpolarisator in der Praxis auch dann eingeschaltet gelassen, wenn keine Messung erfolgt.

Schließlich bleibt bei der bekannten Antriebsvorrichtung die Amplitude der Schwingung konstant. Sie ist auch nicht ohne weiteres in definierter Weise veränderbar. Bei großen Drehwinkeln der untersuchten Probe, wenn also der Analysator viel Licht durchläßt, ist das erhaltene Wechselsignal mit der doppelten Netzfrequenz klein. Die Empfindlichkeit ist gering.

### Offenbarung der Erfindung

Der Erfindung liegt demgegenüber die Aufgabe zugrunde, einen Schwingpolarisator zu schaffen, der
- unabhängig von der Netzfrequenz ist und daher so betrieben werden kann, daß die Meßsignale nicht durch netzfrequente Störungen beeinflußt werden,
- kein schwingungsfähiges, mechanisches System erfordert,
- eine Steuerung durch einen Rechner gestattet.

Erfindungsgemäß wird diese Aufgabe dadurch gelöst, daß der Schwingpolarisator von einem Schrittmotor angetrieben ist, der zu einer hin- und hergehenden Stellbewegung angesteuert wird.

Der Schrittmotor kann von einem Rechner gesteuert werden. Die Bewegung des Schrittmotors und damit des Schwingpolarisators hängt nicht von der Netzfrequenz ab. Der Schwingpolarisator kann daher mit einer von der Netzfrequenz hinreichend verschiedenen Frequenz arbeiten. Die Signalverarbeitung kann daher netzfrequente Störungen leicht eliminieren. Es ist kein schwingungsfähiges, mechanisches System erforderlich.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

### Kurze Beschreibung der Zeichnungen

Fig.1 ist eine schematische Seitenansicht eines Schwingpolarisators, der von einem Schrittmotor angetrieben wird.

Fig.2 ist eine Vorderasnicht des Schwingpolarisators in Richtung entgegen dem Lichtbündel gesehen, also von rechts in Fig. 1.

Fig.3 zeigt im einzelnen in Seitenansicht ähnlich Fig. 1 die Kopplung des Schwingpolarisators mit dem Schrittmotor über ein Metallband.

Fig.4 ist eine Ansicht von rechts in Fig.3.

Fig.5 ist eine schematische Darstellung eines Polarimeters mit einem Schwingpolarisator nach Fig. 1 bis 4.

Fig.6 zeigt Signalformen, wie sie bei dem Polarimeter nach Fig.5 auftreten.

Fig.7 zeigt einen Längsschnitt eines als Analysator benutzten Schwingpolarisators, bei welchem die Polarisation durch Reflexion unter dem Brewster -Winkel hervorgerufen wird.

Fig.8 zeigt schematisch den Strahlengang eines Polarimeters mit einem Schwingpolarisator nach Fig.7.

## Bevorzugte Ausführung der Erfindung

In einem Gehäuse 10 ist ein Rotor 12 in Lagern 14 und 16 drehbar gelagert. Der Rotor 12 enthält einen Rotorkörper 18. Der Rotorkörper 18 hat zylindrische Grundform und weist eine zentrale Bohrung 20 auf. Die Bohrung 20 besteht aus einem engeren Teil 22 und einem erweiterten Teil 24. Zwischen dem engeren Teil 22 und dem erweiterten Teil 24 ist eine Schulter 26 gebildet. Der erweiterte Teil 24 weist auf seiner dem engeren Teil abgewandten Seite einen Innengewindeabschnitt 28 auf.

In dem Rotor 12 sitzt ein Polarisator 30. Der Polarisator 30 ist als Polarisator - Prisma ausgebildet. Der Polarisator 30 ist mit einer Einbettung 32 in einer Fassung 34 gehalten. Die Fassung 34 sitzt in dem erweiterten Teil 24 der Bohrung 20 und liegt mit ihrer Stirnfläche an der Schulter 26 an. Eine Klemmbuchse 36 ist in den Innengewindeabschnitt 28 des erweiterten Teils 24 der Bohrung 20 eingeschraubt. Der Polarisator 30 ist so mit der Fassung 34 zwischen der Schulter 26 und der Stirnfläche der Klemmbuchse 36 gehalten.

An einer Befestigungslasche 38 des Gehäuses 10 ist eine Lichtschranke 40 angebracht. An dem Rotor 12 sitzt eine Fahne 42. Diese Fahne 42 wirkt mit der Lichtschranke 40 zusammen. Lichtschranke 40 und Fahne 42 bilden einen Referenzsignalgeber 44, der bei einer bestimmten Stellung des Rotors 12, wenn die Fahne 42 in die Lichtschranke eintritt, ein Referenzsignal liefert.

Ein Meßlichtbündel 46 tritt längs der Achse des Rotors 12 durch die Bohrung 20 hindurch.

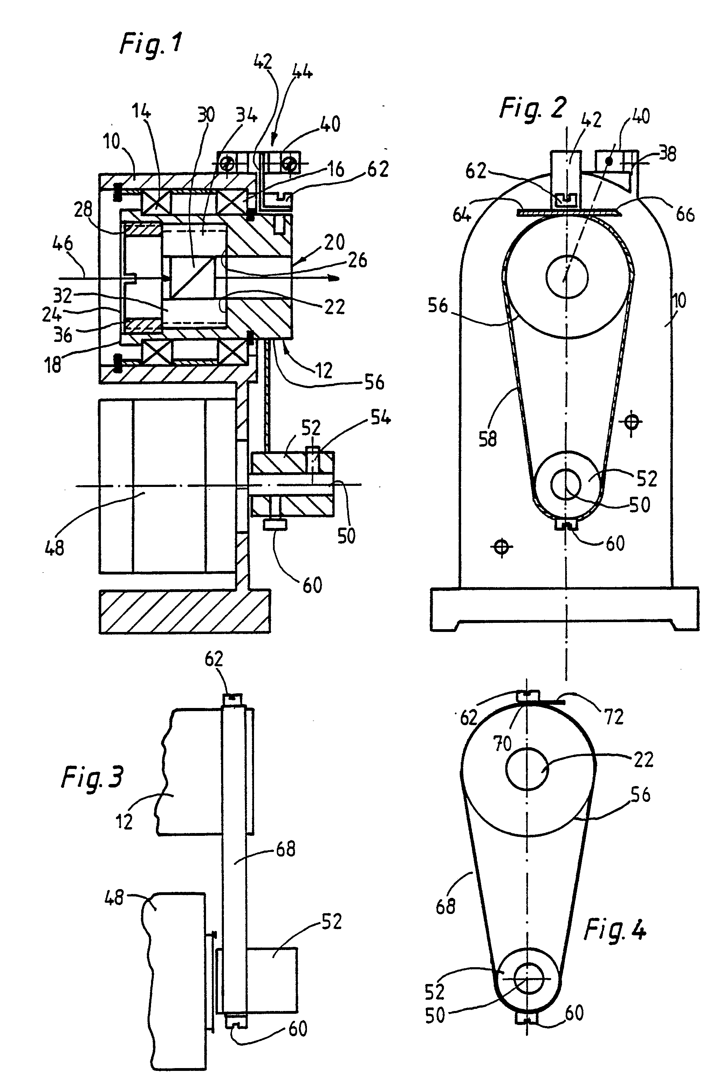

In dem Gehäuse 10 sitzt weiterhin ein Schrittmotor 48. Die Achse des Schrittmotors 48 ist parallel zu der Achse und Drehachse des Rotors 12. Mit 50 ist eine Welle des Schrittmotors 48 bezeichnet. Auf der Welle 50 sitzt eine Antriebsscheibe 52. Die Antriebsscheibe 52 ist durch eine Madenschraube 54 auf der Welle 50 festgeklemmt. Die Antriebsscheibe 52 liegt unterhalb einer Zylinderfläche 56 des Rotors 12. Ein Seil 58 ist um die Antriebsscheibe 52 und um die Zylinderfläche 56 herumgeführt. Das Seil 58 ist mittels einer Klemmschraube 60 an der Antriebsscheibe 52 festgeklemmt. Weiterhin ist das Seil 58 mittels einer Klemmschraube 62 an der Zylinderfläche 56 festgeklemmt. Die Klemmschraube 62 dient gleichzeitig dazu, die Fahne 42 an dem Rotor 12 festzuklemmen. Wie aus Fig.2 ersichtlich ist, hat das Seil 58 zwei Enden 64 und 66. Die Klemmschraube 62 klemmt beide Enden 64 und 66 fest, so daß das Seil 58 straff gespannt ist. Durch dieses festgeklemmte Seil 58 wird die Drehbewegung des Schrittmotors 48 spielfrei mit Untersetzung auf den Rotor 12 und den Polarisator 30 übertragen.

Bei der Anordnung nach Fig.3 und 4 sind Schrittmotor 48 und Rotor 12 mittels eines Metallbandes 68, vorzugsweise mittels eines Stahlbandes, miteinander gekoppelt. Auch hier werden die Enden 70 und 72 des Metallbandes 68 durch die Klemmschraube 62 gemeinsam an dem Rotor 12 festgeklemmt. Im übrigen ist die Anordnung von Fig.3 und 4 ähnlich wie die von Fig.1 und 2. Entsprechende Teile sind in Fig.3 und 4 mit den gleichen Bezugszeichen versehen wie in Fig.1 und 2.

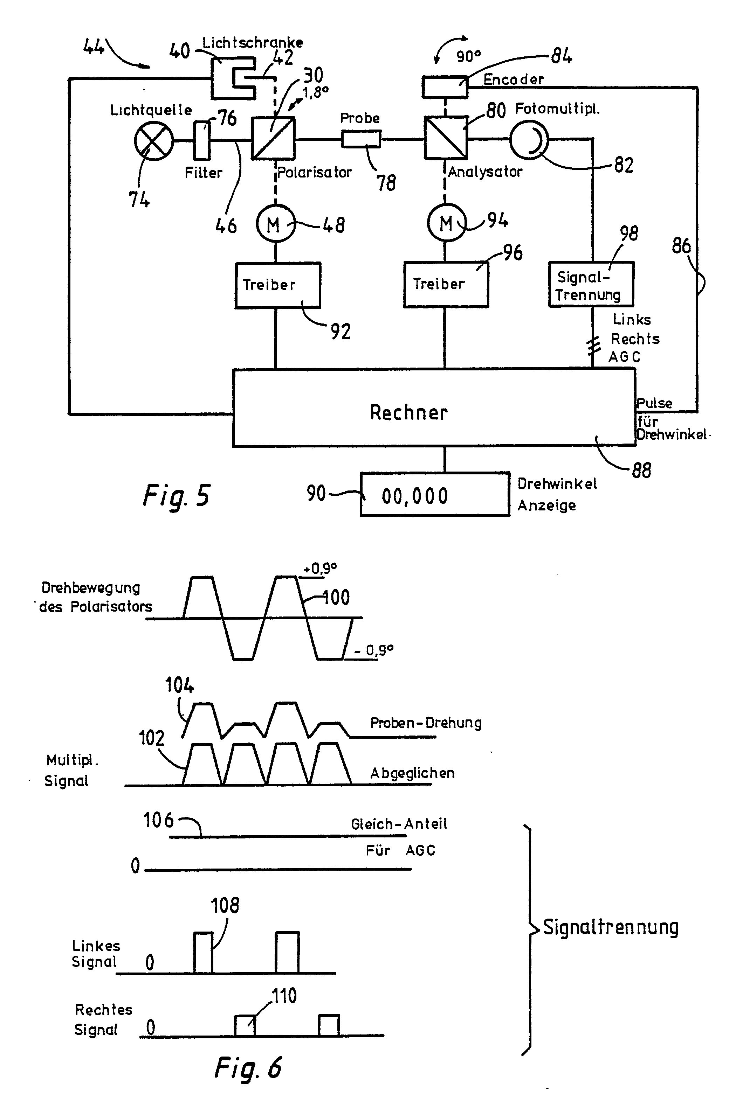

Fig.5 zeigt schematisch die Steuerung des Schrittmotors 48 und die Anordnung des Polarisators 30 in einem Polarimeter.

Das Polarimeter enthält eine Lichtquelle 74. Von der Lichtquelle 74 geht das Meßlichtbündel 46 aus. Das Meßlichtbündel 46 durchsetzt ein Filter 76, den Polarisator 30, eine Küvette 78 und einen Analysator 80 und fällt auf einen photoelektrischen Detektor 82 in Form eines Photomultipliers. Die Küvette 78 nimmt eine Probe auf, deren optische Drehung gemessen werden soll. Mit dem Analysator 80 ist ein Encoder 84 gekoppelt, der Drehwinkelimpulse über eine Leitung 86 auf einen Rechner 88 gibt. An einer Digitalanzeige 90 wird der Drehwinkel des Analysators 80 und damit die optische Drehung der Probe angezeigt.

Der Schrittmotor 48 wird von dem Rechner 88 über eine Treiberschaltung 92 angesteuert. Der Analysator 80 ist von einem Schrittmotor 94 in ähnlicher Weise wie der Schrittmotor 48 verdrehbar. Auch der Schrittmotor 94 ist von dem Rechner 88 über eine Treiberschaltung 96 ansteuerbar. Mit 98 ist eine Schaltung bezeichnet, die von dem Ausgangssignal des Detektors 82 beaufschlagt ist und eine Signaltrennung bewirkt. Diese Schaltung 98 liefert Steuersignale für die Links- oder Rechtsdrehung des Analysators und für die automatische Verstärkungsanpassung.

Die beschriebene Anordnung arbeitet wie folgt:

Zunächst wird der Polarisator 30 über den Schrittmotor 48 nach rechts in Fig.2 verdreht, bis der Referenzsignalgeber 44 anspricht, indem die Fahne 42 gerade in die Lichtschranke 40 eintritt. Aus dieser Stellung wird der Rotor 12 dann von dem Schrittmotor 48 um eine feste Anzahl von Schritten, beispielsweise zehn Schritte, zurückgedreht. Die so erhaltene Lage wird als Nullage des Rotors 12 definiert. Das ist z.B. die in Fig.2 dargestellte Lage.

Aus dieser Nullage wird der Rotor 12 durch entsprechende Ansteuerung des Schrittmotors 48 periodisch nach rechts und nach links verdreht. Bei dem in der ersten Zeile von Fig.5 dargestellten Beispiel wird der Rotor 12 zwischen +0.9° und - 0,9° aus der Nullage verdreht. Die Drehbewegung als Funktrion der Zeit hat dabei einen trapezförmigen Verlauf, wie durch Kurve 100 in Fig.5 dargestellt ist. Die Frequenz der Drehbewegung kann wesentlich von der Netzfrequenz abweichen.

Entsprechend wird der Polarisator 30 und damit die Polarisationsebene des Meßlichtbündels 46 gedreht. Diese periodische Drehung der Polarisationsebene überlagert sich einer Drehung der Polarisationsebene durch die Probe in der Küvette 78. Die Intensität des auf den Detektor 82 fallenden Lichtes hängt von dem Winkel zwischen der Polarisationsebene des Meßlichtbündels 46 un der zur Polarisationsrichtung des Analysators 80 senkrechten Richtung ab. Diese Intensität ist unabhängig davon, ob dieser Winkel positiv oder negativ ist. Wenn also ohne Probe die Polarisationsrichtungen von Polarisator 30 in seiner Nullstellung und Analysator 80 gekreuzt zueinander stehen, dann tritt bei der Schwingbewegung des Polarisators 30 ein Signal entsprechend Kurve 102 in der zweiten Zeile von Fig. 6 auf. Wird die Polarisationsebene durch die Probe gedreht, dann wird der Intensitätsverlauf, wie durch die Kurve 104 in der zweiten Zeile von Fig.6 dargestellt ist, gegenüber der Nullinie verschoben und außerdem unsymmetrisch. Aus diesem Intensitätsverlauf und dem entsprechenden Signalverlauf am Detektor werden durch die Schaltung 98 drei Signale abgeleitet, die in der dritten, vierten und fünften Zeile von Fig.6 dargestellt sind. Der Gleichlicht- bzw. Gleichspannungsanteil 106 in der Nullage des Polarisators 30 dient zur automatischen Verstärkungsregelung. Praktisch wird die Spannung an dem als Photomultiplier ausgebildeten Detektor 82 entsprechend vermindert, um eine Übersteuerung des Photomultipliers zu vermeiden. Außerdem werden die bei der Drehung des Polarisators 30 nach links in Fig.2 und die bei der Drehung des Polarisators 30 nach rechts gegenüber dem Gleichspannungsanteil erhaltenen Signale 108 bzw. 110 erfaßt. Die Differenz dieser Signale dient über den Rechner zur Ansteuerung des Schrittmotors 94 derart, daß der Analysator der Drehung der Polarisationsebene durch die Probe nachgeführt wird.

Der Rechner kann auch den Schrittmotor 48 in Abhängigkeit von der Abweichung des Analysators 80 von der Abgleichstellung so steuern, daß die Schwingungsamplitude des Polarisators 30 bei großen Abweichungen größer ist als bei kleinen Abweichungen. Es wird dann bei großen Abweichungen von der Abgleichlage der sonst zu beobachtenden Verringerung der Empfindlichkeit entgegengewirkt, während andererseits durch die Verringerung der Schwingungsamplitude bei kleinen Abweichungen die Genauigkeit des Abgleichs erhöht wird.

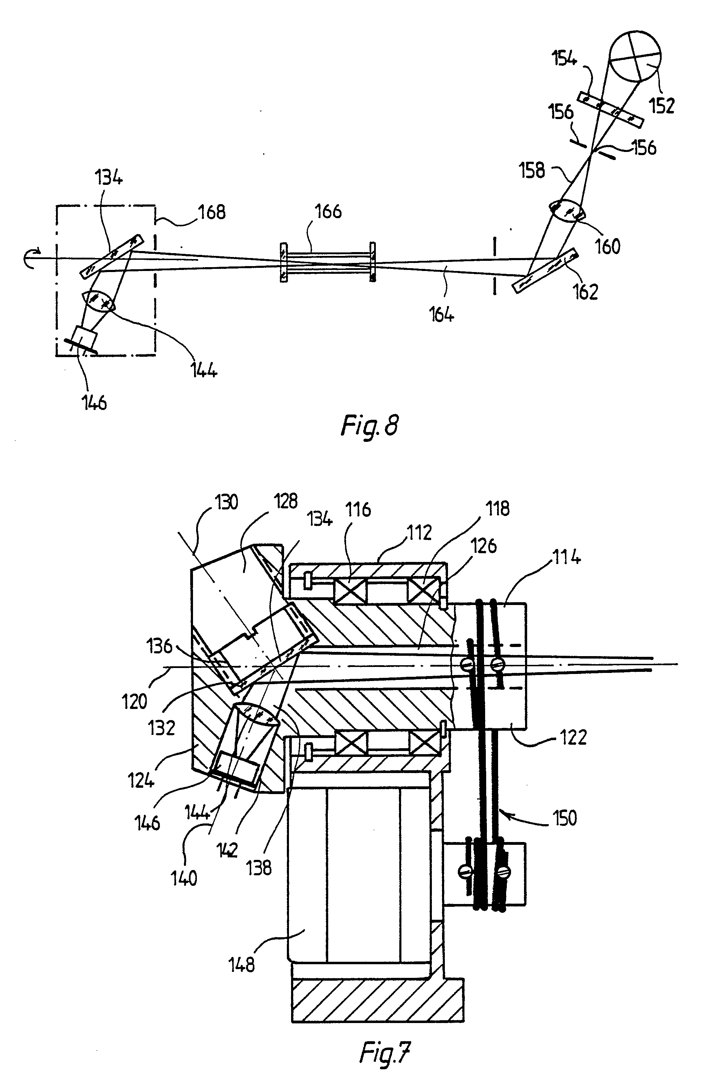

Bei der Ausführung des Schwingpolarisators nach Fig.7 wird zur Polarisation des Lichtes die Reflexion des Lichtes unter dem Brewsterwinkel ausgenutzt. Der Schwingpolarisator wird hier als Analysator in einem Polarimeter ausgenutzt und enthält gleichzeitig den photoelektrischen Detektor des Polarimeters.

In einem Gehäuse 112 ist ein Polarisatoranker 114 mittels Kugellagern 116 und 118 um eine Achse 120 drehbar gelagert. Der Polarisatoranker 114 weist einen zylindrischen Schaft 122 und einen Kopfteil 124. Der Schaft 122 ist in den Kugellagern 116 und 118 gelagert.

Der Schaft 122 weist eine Längsbohrung 126 auf. In dem Kopfteil 124 ist eine Bohrung 128 von größerem Durchmesser angebracht, welche mit der Längsbohrung 126 in Verbindung steht. Die Achse 130 der Bohrung 128 bildet mit der verlängerten Achse der Längsbohrung einen Winkel ß. Zwischen der Längsbohrung 126 und der Bohrung 128 ist eine Ringschulter 132 gebildet. Auf der Ringschulter 132 liegt eine plane Reflexplatte 134. Die Reflexplatte 134 ist durch eine Gewindehülse 136 gesichert, die in ein Innengewinde der Bohrung 128 eingeschraubt ist. Der Winkel ß und der Brechungsindex der planen Reflexplatte 134 ist so gewählt, daß der Winkel ß dem Brewsterwinkel entspricht.

In dem Kopfteil 124 ist weiterhin eine Bohrung 138 vorgesehen. Die Achse 140 der Bohrung 138 bildet ebenfalls einen Winkel ß mit der verlängerten Achse 120 der Bohrung 126. Dabei liegt die Achse 140 in der durch die Achsen 120 und 130 bestimmten Ebene und symmetrisch zu der Achse in bezug auf die Achse 120. In der Bohrung 138 sitzt eine Buchse 142. Die Buchse 142 ist nach innen zu durch eine Linse 144 abgeschlossen. Am äußeren Ende der Buchse 142 sitzt ein photoelektrischer Detektor 146.

Der Polarisatoranker 114 ist durch einen Schrittmotor 148 antreibbar, der an dem Gehäuse 112 sitzt und mit dem Polarisatorblock 114 über einen Seiltrieb 150 gekoppelt ist. Der Seiltrieb 150 ist ähnlich dem von Fig. 1 bis 4.

Der beschriebene Schwingpolarisator sitzt als Analysator in einem Polarimeter, das in Fig.8 schematisch dargestellt ist.

In Fig.8 ist mit 152 eine Lichtquelle bezeichnet. Das Licht der Lichtquelle 152 tritt durch ein Filter 154 und durch eine Blende 156. Das von der Blende 156 ausgehende Lichtbündel 158 wird von einer Linse 160 gesammelt und fällt unter einem Winkel ß auf eine Reflexplatte 162. Der Winkel ß von beispielsweise 56° für Reflexplatten aus Quarz entspricht dem Brewsterwinkel für licht von 250 nm Wellenlänge. Das Licht wird dadurch polarisiert.

Das polarisierte Lichtbündel 164 tritt dann durch eine Küvette 166 mit einer optisch aktiven Probe. In der Probe erfährt das Licht eine optische Drehung. Das so erhaltene Lichtbündel fällt auf den beschriebenen, als Analysator wirkenden Schwingpolarisator 168 mit der Reflexplatte 134, der Linse 144 und dem Detektor 146. An der Reflexplatte 134 wird das Lichtbündel 164 wieder unter dem Brewsterwinkel $\beta$ auf den Detektor 146 reflektiert. Durch den Schrittmotor 148 wird der Polarisatoranker 114 in Schwingungen versetzt. Bei einer Drehung der Polarisationsebene durch die Probe entsteht dabei ein unsymmetrisches Signal am Detektor, das in üblicher Weise zum Abgleich benutzt werden kann.

In Fig.8 sind der Deutlichkeit der Darstellung halber die Reflexplatten 162 und 134 parallel statt gekreuzt zueinander dargestellt.

Der beschriebene Polarisator kann auch bei kurzwelligem Licht unterhalb von 250 nm verwendet werden. Der Brewsterwinkel ist zwar nach der Beziehung $\tan \beta = n$ vom Brechungsindex n abhängig. Es zeigt sich aber, daß die Änderungen des Brewsterwinkels so gering sind, daß mit dem Benutzten Wellenlängenbereich eine Einstellung nach dem Minimum mit der erforderlichen Genauigkeit möglich ist.

## Ansprüche

1. Antriebsvorrichtung zum Antreiben eines Schwingpolarisators bei einem Polarimeter, **dadurch gekennzeichnet, daß** der Schwingpolarisator (30) von einem Schrittmotor (48) angetrieben ist, der zu einer hin- und hergehenden Stellbewegung angesteuert wird.

2. Antriebsvorrichtung nach Anspruch 1, **dadurch gekennzeichnet, daß** mit dem Schwingpolarisator (30) ein Referenzlagegeber (44) verbunden ist, der bei einer definierten Lage des Schwingpolarisators (30) ein Referenzsignal liefert.

3. Antriebsvorrichtung nach Anspruch 2, **dadurch gekennzeichnet, daß** der Referenzsignalgeber (44) eine stationär angeordnete Lichtschranke (40) enthält, die mit einer mit dem Schwingpolarisator (30) verbundenen Fahne (42) zusammenwirkt.

4. Antriebsvorrichtung nach Anspruch 2 oder 3, **dadurch gekennzeichnet, daß** eine Nullage des Referenzsignalgebers (44) gegenüber der Lage, bei welcher der Referenzsignalgeber (44) anspricht, um eine vorgegebene Anzahl von Schritten des Schrittmotors (48) versetzt ist.

5. Antriebsvorrichtung nach einem der Ansprüche 1 bis 4, **dadurch gekennzeichnet, daß** der Schrittmotor (48) von einem Rechner (88) gesteuert ist.

6. Antriebsvorrichtung nach Anspruch 5, **dadurch gekennzeichnet, daß** die Schwingungsamplitude, gekennzeichnet durch jeweils eine Anzahl von Schritten des Schrittmotors (48), kontrolliert veränderbar ist.

7. Antriebsvorrichtung nach Anspruch 6, **dadurch gekennzeichnet, daß** die Schwingungsamplitude gesteuert von dem Rechner (88) mit Annäherung an einen Abgleichzustand automatisch vermindert wird.

8. Antriebsvorrichtung nach einem der Ansprüche 1 bis 7, **dadurch gekennzeichnet, daß** der Schrittmotor (48) mit dem Polarisator (30) über einen Seil- oder Bandtrieb (58;68) gekoppelt ist.

9. Antriebsvorrichtung nach Anspruch 8, **dadurch gekennzeichnet, daß** das Seil (58) oder Band (68) des Seil-bzw. Bandtriebs einerseits an eine Antriebsscheibe (52) auf der Welle des Schrittmotors (48) und andererseits an einen den Polarisator (30) tragenden Rotor (12) angeklemmt ist.

10. Antriebsvorrichtung nach Anspruch 9, **dadurch gekennzeichnet, daß** ein endliches Seil (58) oder Band (68) mit einem Mittelteil um die Seiltrommel (52) herumgelegt und mittels einer Klemmschraube (60) in einer durch die Achsen von Rotor (12) und Schrittmotor (48) bestimmten Mittelebene festgeklemmt ist und daß die Enden des Seils (58) oder Bandes (68) gegensinnig zueinander um den Rotor (12) herumgelegt und in straffem Zustand durch eine gemeinsame Klemmschraube (62) an dem Rotor (12) festgeklemmt sind.

11. Antriebsvorrichtung nach einem der Ansprüche 8 bis 10, **dadurch gekennzeichnet, daß** das Band (68) ein Stahlband ist.

12. Antriebsvorrichtung nach einem der Ansprüche 1 bis 11, **dadurch gekennzeichnet, daß** der Polarisatoranker (114) eine mit ihrer Flächennormalen (130) unter dem Brewsterwinkel ($\beta$) zur Bündelachse angeordnete Reflexplatte (134) enthält.

13. Antriebsvorrichtung nach Anspruch 12, **dadurch gekennzeichnet, daß** ein Detektor an dem Polarisatoranker (114) in einer die Bündelachse (120) und die Flächennormale (130) enthaltenden Ebene angebracht und von dem durch die Reflexplatte (134) reflektierten Lichtbündel beaufschlagt ist.

Fig.1

Fig. 2

Fig.3

Fig. 4

*Fig. 5*

*Fig. 6*

Fig.8

Fig.7